(19) Europäisches Patentamt
European Patent Office
Office européen des brevets

(11) EP 0 805 220 B1

(12) FASCICULE DE BREVET EUROPEEN

(45) Date de publication et mention
de la délivrance du brevet:
**06.11.2002 Bulletin 2002/45**

(51) Int Cl.⁷: **C22C 38/44**, C22C 38/00

(21) Numéro de dépôt: **97400826.0**

(22) Date de dépôt: **11.04.1997**

(54) **Acier faiblement allié pour la fabrication de moules pour matières plastiques**

Niedrig legiertes Stahl für die Herstellung von Pressformen für Plastikwerkstoffen

Low alloy steel for the manufacture of moulds for the plastics industry

(84) Etats contractants désignés:
**AT BE DE ES FR GB IT PT SE**

(30) Priorité: **29.04.1996 FR 9605336**

(43) Date de publication de la demande:
**05.11.1997 Bulletin 1997/45**

(73) Titulaire: **USINOR INDUSTEEL (France)**
**92800 Puteaux (FR)**

(72) Inventeurs:
• **Beguinot, Jean**
**71200 Le Creusot (FR)**
• **Primon, Gilbert**
**71230 Saint Vallier (FR)**
• **Chenou, Frédéric**
**71200 Le Creusot (FR)**

(74) Mandataire: **Ventavoli, Roger**
**USINOR,**
**Direction Propriété Industrielle,**
**Immeuble "La Pacific",**
**La Défense,**
**11/13 Cours Valmy,**
**TSA 10001**
**92070 La Défense (FR)**

(56) Documents cités:
**EP-A- 0 225 425**      **GB-A- 1 009 924**
**GB-A- 1 098 952**      **US-A- 3 970 448**
**US-A- 4 673 433**      **US-A- 5 110 379**

• **PATENT ABSTRACTS OF JAPAN vol. 95, no. 0004 & JP 07 102342 A (SANYO SPECIAL STEEL CO.LTD.), 18 Avril 1995,**
• **PATENT ABSTRACTS OF JAPAN vol. 16, no. 261 (C-950), 12 Juin 1992 & JP 04 059942 A (AICHI STEEL WORKS LTD.), 26 Février 1992,**
• **PATENT ABSTRACTS OF JAPAN vol. 14, no. 232 (C-719), 17 Mai 1990 & JP 02 057632 A (NIPPON STEEL CORP.), 27 Février 1990,**
• **PATENT ABSTRACTS OF JAPAN vol. 14, no. 215 (C-716), 8 Mai 1990 & JP 02 050910 A (NIPPON STEEL CORP.), 2 Février 1990,**

**Description**

La présente invention concerne un acier faiblement allié utilisé notamment pour la fabrication de moules pour matières plastiques.

Les moules pour matières plastiques ou pour caoutchouc sont fabriqués par usinage de blocs de métal massifs dont l'épaisseur peut atteindre 1,5 mètres. L'usinage a pour but, notamment, de former une empreinte ayant la forme de l'objet à obtenir par moulage. Le plus souvent, la surface de l'empreinte est soit polie, soit grainée chimiquement, afin de conférer aux objets obtenus par moulage l'aspect de surface souhaité. L'opération de moulage se faisant par injection sous pression de matière plastique chaude, le moule doit, d'une part, résister aux efforts engendrés par la pression de la matière plastique, d'autre part, évacuer la chaleur de la matière plastique aussi vite que possible pour accroître la productivité des opérations de moulage, et enfin, résister à l'usure engendrée par le frottement de la matière plastique sur la surface de l'empreinte. De plus, les caractéristiques de l'acier doivent rester stables pendant son utilisation, c'est à dire, être insensibles aux cycles thermiques engendrés par les opérations de moulage et demeurer aussi homogènes que possible, y compris dans les sections de plus forte épaisseur. Pour satisfaire toutes ces conditions, il faudrait pouvoir disposer, pour la fabrication de moules pour injection de matières plastiques, d'un acier qui ait, notamment et à la fois, une très grande dureté, une très bonne aptitude à l'usinage, une très bonne aptitude au polissage ou au grainage chimique, une bonne conductibilité thermique et une très grande homogénéité de toutes ces caractéristiques même pour les épaisseur les plus importantes. Un tel acier idéal n'est pas connu.

Pour fabriquer les moules on utilise en général des blocs d'acier faiblement allié suffisamment trempant pour obtenir, après trempe et revenu une structure martensitique ou bainitique, sensiblement exempte de ferrite, ayant une dureté suffisante, une limite d'élasticité élevée, une bonne ténacité.

Les aciers les plus utilisés sont l'acier P20 selon la norme AISI et les aciers W1.2311 ou W1.2738 selon la norme allemande WERKSTOFF.

L'acier P20 contient, en poids, de 0,28% à 0,4% de Carbone, de 0,2% à 0,8% de Silicium, de 0,6% à 1% de Manganèse, de 1,4% à 2% de Chrome, de 0,3% à 0,55% de Molybdène, le reste étant du fer et des impuretés résultant à l'élaboration.

Les aciers W1.2311 et W1.2738 contiennent, en poids, de 0,35% à 0,45% de Carbone, de 0,2% à 0,4% de Silicium, de 1,3% à 1,6% de Manganèse, de 1,8% à 2,10% de Chrome et de 0,15% à 0,25% de Molybdène ; l'acier W1.2738 contient en outre de 0,9% à 1,2% de Nickel ; le reste étant du fer et des impuretés liées à l'élaboration.

Ces aciers ont une bonne tenue à l'usure. Mais, les inventeurs ont constaté, notamment, que la combinaison de- leurs caractéristiques de conductibilité thermique et de trempabilité était insuffisante. L'acier W1.2738 est sensiblement plus trempant que l'acier W1.2311 qui, lui même, est plus trempant que l'acier P20. Mais, l'acier W1.2738 a une conductibilité thermique sensiblement plus faible que celle de l'acier W1.2311, elle même sensiblement plus faible que celle de l'acier P20. Par ce que l'acier qui a la meilleure conductibilité thermique a la moins bonne trempabilité, et inversement, il n'est pas possible de fabriquer des moules très massifs ayant une bonne conductibilité thermique. Si on voulait fabriquer un moule de grande dimension ayant une bonne conductibilité thermique, on devrait utiliser l'acier P20 en lieu et place de l'acier W1.2738, et concevoir le moule en plusieurs pièces relativement peu massives au lieu de le concevoir en une seule pièce très massive. Mais cette technique n'est jamais utilisée, ni même envisagée, par ce qu'elle aurait l'inconvénient de compliquer considérablement et d'augmenter le coût de fabrication des moules. En effet, il faudrait assurer un ajustement parfait des différentes pièces pour éviter de former des marques en surface des objets fabriqués par moulage, et cela n'est pratiquement pas possible.

On a également proposé dans JP 2-57632 ou dans JP 2-50910 un acier pour moules contenant de 0,15 à 0,5% de carbone, de 0,05 à 0,75% de silicium, de 0,25 à 2% de manganèse, de 0,25 à 4% de nickel, de 1 à 4% de chrome, de 0,15 à 3 % de molybdène, de 0,005 à 1,5% d'aluminium, de 0,002 à 0,05% d'azote, éventuellement du titane, du bore, du zirconium et du vanadium. Moyennant un traitement thermique adapté, cet acier présente une tenue à la fatigue thermique améliorée. Compositions d'aciers faiblement alliés sont aussi proposées dans les documents US 4673433, JP 7-102342, US 5110379, GB 1098952, US 3970448 et GB 1009924.

Le but de la présente invention est de remédier à cet inconvénient en proposant un acier qui présente à la fois les principales caractéristiques souhaitées pour un acier destiné a la fabrication de moules, et notamment une très bonne résistance à l'usure, et une combinaison de caractéristiques de trempabilité et de conductivité thermique meilleure que ce que l'art antérieur permet d'obtenir.

A cet effet, l'invention a pour objet un acier pour la fabrication de moules pour injection de matières plastiques ou de caoutchouc dont la composition chimique contient, en poids :

$$0,35\% \leq C \leq 0,5\%$$

$$0\% \leq Si \leq 0{,}5\%$$

$$0{,}2\% \leq Mn \leq 2{,}5\%$$

$$0\% \leq Ni \leq 4\%$$

$$0\% \leq Cr \leq 4\ \%$$

$$0\% \leq Mo + W/2 \leq 2\%$$

$$0 \leq Cu \leq 1\ \%$$

$$0\ \% \leq V + Nb/2 + Ta/4 \leq 0.5\ \%$$

$$0{,}005\ \% \leq Al \leq 0{,}2\ \%$$

$$0\ \% \leq B \leq 0{,}015\ \%$$

- éventuellement, au moins un élément pris parmi le titane et le zirconium, en des teneurs telles que la somme de la teneur en titane et de la moitié de la teneur en zirconium soit inférieure ou égale à 0,3 %,
- éventuellement, au moins un élément pris parmi le soufre, le sélénium et le tellure, la somme des teneurs en ces éléments étant inférieure ou égale à 0,2 %,
- éventuellement, au moins un élément pris parmi le plomb et le bismuth, la somme des teneurs en ces éléments étant inférieure ou égale à 0,2 %,
- éventuellement du calcium en une teneur inférieure ou égale à 0,1 %,

le reste étant du fer et des impuretés résultant de l'élaboration ; l'analyse satisfaisant, simultanément, les relations suivantes (les teneurs étant exprimées en % en poids):

$$Cr + 3 \times (Mo + W/2) + 10 \times (V + Nb/2 + Ta/4) \geq 1$$

$$R = 3{,}8 \times C + 10 \times Si + 3{,}3 \times Mn + 2.4 \times Ni + 1{,}4 \times (Cr + Mo + W/2) \leq 9$$

$$Tr = 3{,}8 \times C + 1{,}1 \times Mn + 0.7 \times Ni + 0{,}6 \times Cr + 1{,}6 \times (Mo + W/2) + kB \geq 3$$

$$(\text{avec } kB = 0{,}5 \text{ si } B \geq 0{,}0005\%\ \% \text{ et } kB = 0 \text{ si non})$$

et,

$$R \leq Max\ (2{,}33 \times Tr - 1;\ 0{,}9 \times Tr + 4)$$

De préférence, la composition chimique est telle que:

$$Mo + W/2 \geq 0,4\%$$

Il est également préférable que Si $\leq$ 0,15 %, et mieux encore, que Si $\leq$ 0,1 %.

Il est souhaitable enfin que la teneur en bore soit supérieure ou égale à 0,0005 %.

De préférence, la composition de l'acier doit être choisie de telle sorte que **Tr** $\geq$ 4,3.

Les conditions précédantes sont obtenues de façon particulièrement favorables lorsque la composition chimique de l'acier est telle que :

$$0,37 \% \leq C \leq 0,45 \%$$

$$0\% \leq Si \leq 0,15\%$$

$$0,2.\% \leq Mn \leq 1,5\%$$

$$0\% \leq Ni \leq 0,5\%$$

$$0\% \leq Cr \leq 2,5\%$$

$$0 \% \leq Mo + W/2 \leq 1 \%$$

$$0 \leq Cu \leq 1 \%$$

$$0\% \leq V + Nb/2 + Ta/4 \leq 0,2\%$$

$$0,005 \% \leq Al \leq 0,2 \%$$

$$0,0005 \% \leq B \leq 0,015\%$$

$$0 \% \leq Ti + Zr/2 \leq 0,3 \%$$

la composition satisfaisant, en outre, la relation :

$$R \leq 2,33 \times Tr - 2,4.$$

Lorsque l'acier contient du titane ou du zirconium, ce qui est préférable, il est souhaitable que, lors de l'élaboration, le titane ou le zirconium soient introduits progressivement dans l'acier liquide de façon à obtenir une précipitation très fine des nitrures de titane ou de zirconium. Il faut, alors, que les teneurs en titane, zirconium et azote (en % en poids) soient, de préférence, telles que :

$$0,00003 \leq (N) \times (Ti + Zr/2) \leq 0,0016$$

Dans ces conditions, à l'état solide, le nombre de précipités de nitrure de titane ou de zirconium de taille supérieure à 0,1 μm comptés sur une aire de 1 mm$^2$ d'une coupe micrographique est inférieur à 4 fois la somme de la teneur totale en titane précipité sous forme de nitrures et de la moitié de la teneur totale en zirconium précipité sous forme de nitrures, exprimée en millièmes de % en poids.

L'invention concerne, enfin, un bloc en acier dont la composition chimique est conforme à l'invention, la dimension caractéristique du bloc étant comprise entre 20 mm et 1500 mm environ, la structure de l'acier étant, en tous points du bloc, martensitique ou bainitique, essentiellement exempte de ferrite, et la dureté étant, en tous points du bloc, comprise entre 250 Brinell et 370 Brinell, et, de préférence, comprise entre 270 Brinell et 350 Brinell.

L'acier selon l'invention peut, également, être utilisé pour la fabrication par fonderie de moules pour matières plastiques.

L'invention va, maintenant, être décrite plus en détails, mais de façon non limitative, et être illustrée par les exemples qui suivent.

Pour obtenir l'ensemble des propriétés d'emploi nécessaires à la fabrication de moules pour injection de matières plastiques, la composition chimique de l'acier doit comporter, en poids :

- plus de 0,35 % de carbone pour obtenir à la fois une dureté suffisante et une très bonne résistance à l'usure, résistance à l'usure qui, à dureté égale, est d'autant meilleure que la teneur en carbone est élevée ; cependant, la teneur en carbone ne doit pas être trop importante pour conserver une usinabilité et une ténacité satisfaisantes ; aussi, la teneur en carbone doit rester inférieure ou égale à 0,5 % ; de préférence, la teneur en carbone doit être comprise entre 0,37 % et 0,45 % ;
- du molybdène, de préférence plus de 0,4 %, pour augmenter la trempabilité, et, notamment, augmenter l'étendue du domaine bainitique, ce qui permet d'obtenir une bonne homogénéité des caractéristiques sur des blocs de forte épaisseur ; le molybdène présente, également, l'avantage d'augmenter la résistance au revenu et de former avec le carbone des carbures qui, à résistance égale, augmentent la résistance à l'usure ; cependant, la teneur en molybdène n'a pas besoin d'être supérieure à 2 % pour obtenir le plein effet de cet élément, et, de préférence, la teneur en molybdène est limitée à 1 % notamment par ce que cet élément est très coûteux et parce qu'il favorise la formation de ségrégations défavorables à l'usinabilité et à l'aptitude au polissage ; le molybdène peut être substitué totalement ou partiellement par du tungstène à raison de 2 % de tungstène pour 1 % de molybdène, les conditions de composition chimique sont donc définies pour la grandeur Mo + W/2 ;
- du chrome, entre 0 % et 4 %, et de préférence entre 1,5 % et 2,5 %, pour améliorer la trempabilité et améliorer la résistance à l'adoucissement et à l'usure, sans trop détériorer la conductibilité thermique ;
- éventuellement, du vanadium, du niobium ou du tantale, seuls ou en combinaison, la somme V + Nb/2 + Ta/4 étant comprise entre 0 % et 0,5 %, et, de préférence, inférieure ou égale à 0,2 %, pour augmenter la dureté et améliorer la résistance à l'usure ;
- plus de 0,2 % de manganèse qui a l'avantage de fixer le soufre et d'augmenter la trempabilité mais qui a l'inconvénient de diminuer sensiblement la conductibilité thermique de l'acier, aussi sa teneur est limitée à 2,5 %, et, de préférence, à 1,5%;
- moins de 0,5 %, et de préférence moins de 0,15 %, et, mieux encore, moins de 0,1 % de silicium, élément utilisé pour la désoxydation de l'acier liquide, mais qui a l'inconvénient d'augmenter très sensiblement la résistivité thermique de l'acier et de favoriser la formation de mésoségrégations sur les blocs de taille importante ; de préférence, la teneur en silicium doit être la plus faible possible;
- éventuellement, du nickel en des teneurs comprises entre 0 % et 4 % pour augmenter la trempabilité, et, de préférence, moins de 0,5 % pour ne pas trop réduire la conductivité thermique ; cet élément peut, également, être présent à titre d'élément résiduel lorsque l'acier est élaboré à partir de ferrailles ;
- éventuellement entre 0 % et 1 % de cuivre, élément résiduel apporté par les matières premières, mais pouvant avoir un effet durcissant favorable lorsqu'il est accompagné de nickel;
- entre 0.005 % et 0.2 % d'aluminium pour désoxyder l'acier et, le cas échéant, contribuer à la protection du bore de trempabilité;
- au moins un élément pris parmi le titane et le zirconium, la somme de la teneur en titane et de la moitié de la teneur en zirconium étant inférieure ou égale à 0,3 %, afin de piéger l'azote que l'acier contient toujours et qui pourrait neutraliser l'effet du bore ; lorsque l'acier contient du titane ou du zirconium, il est préférable que les teneurs en titane, zirconium et azote (élément toujours présent, au moins à titre d'impureté en des teneurs comprises entre quelques ppm et quelques centaines de ppm) soient telles que :

$$0,00003 \leq (N) \times (Ti + Zr/2) \leq 0,0016$$

et que le titane ou le zirconium soient introduits dans l'acier par dissolution progressive d'une phase oxydée de titane ou de zirconium, par exemple en effectuant l'ajout de titane ou de zirconium dans de l'acier non désoxydé, puis en ajoutant un désoxydant fort tel que l'aluminium ; conditions qui permettent d'obtenir une dispersion très fine de nitrures de titane, favorable à la résilience, à l'usinabilité, et à la polissabilité ; lorsque le titane ou le zirconium sont introduits de cette façon préférentielle, le nombre de nitrures de titane ou de zirconium de taille supérieure à 0,1 µm, comptés sur une aire de 1mm$^2$ d'une coupe micrographique d'acier solide, est inférieure à 4 fois la somme de la teneur totale en titane précipité sous forme de nitrures et de la moitié de la teneur totale en zirconium précipité sous forme de nitrures, exprimée en millièmes de % ;

- éventuellement du bore, entre 0 % et 0,015 %, et de préférence plus de 0,0005 %, et mieux encore, plus de 0,002 %, pour augmenter la trempabilité sans détériorer la conductibilité thermique ;
- du soufre, soit à titre d'impureté, c'est à dire en des teneurs inférieures à 0,005 %, soit à titre d'addition, accompagné éventuellement de sélénium ou de tellure pour améliorer l'usinabilité ; la somme des teneurs en soufre, sélénium et tellure étant inférieure ou égale à 0,2 % ; l'usinabilité peut, également, être améliorée par une addition de plomb ou de bismuth en des teneurs inférieures ou égales à 0,2 % ou encore, par une addition de calcium en une teneur inférieure ou égale à 0,1 % ;

le reste étant du fer et des impuretés résultant de l'élaboration.

A l'intérieur de ce domaine de composition, la teneur en chacun des éléments doit être telle que, si **R** est un indice qui représente la résistivité thermique de l'acier, et **Tr** un indice qui représente sa trempabilité, les conditions suivantes soient respectées :

$$R \leq 9$$

$$Tr \geq 3, \text{ et de préférence, } Tr \geq 4,3$$

$$Tr \geq 3, \text{ et de préférence, } Tr \geq 4,3$$

Dans ces expressions, **R** et **Tr** sont des coefficients sans dimension qui se calculent par les formules :

$$R = 3,8 \times C + 10 \times Si + 3,3 \times Mn + 2,4 \times Ni + 1,4 \times (Cr + Mo + W/2)$$

$$Tr = 3,8 \times C + 1,1 \times Mn + 0,7 \times Ni + 0,6 \times Cr + 1,6 \times (Mo + W/2) + kB$$

avec kB = 0,5 si B $\geq$ 0,0005 % et kB = 0 si non,

Ces conditions permettent d'obtenir une trempabilité suffisante pour qu'après une trempe, la structure soit martensitique ou bainitique (la structure peut être mixte martensito-bainitique), essentiellement exempte de ferrite (la ferrite n'est pas souhaitée, mais il peut en rester un petit reliquat), et pour obtenir une conductibilité thermique de l'acier permettant d'augmenter la productivité des installations de moulage par injection.

En calculant, pour chaque élément, le rapport des coefficients de chacune des deux formules précédantes, on constate que le silicium, le nickel, et dans une certaine mesure le manganèse, sont des éléments défavorables dont il faut ajuster les teneurs au plus bas niveau compatible avec les diverses contraintes métallurgiques, et, par contre, qu'il faut privilégier, dans l'ordre, le bore, le molybdène (ou le tungstène), le carbone et le chrome, qui sont des éléments très favorables en termes de contribution à la trempabilité à incidence donnée sur la résistivité thermique. Plus précisément, en calculant les rapports des coefficients intervenant dans les formules de **R** et de **Tr**, pour les coefficients du molybdène, du carbone et du chrome, il est apparu aux inventeurs que la composition chimique de l'acier devait satisfaire à la relation :

$$R \leq \text{Max} (2,33 \times Tr\text{-}1 \; ; \; 0,9 \times Tr + 4)$$

Cette expression signifie que **R** doit être inférieur ou égal à la plus grande des deux valeurs 2,33 x **Tr** - 1 et 0,9 x **Tr** + 4.

Enfin, pour obtenir une dureté supérieure à 250 HB après un revenu à une température supérieure à 500 °C, nécessaire pour obtenir une bonne stabilité des propriétés de l'acier et une résilience satisfaisante, les teneurs en molybdène, tungstène, chrome, vanadium, niobium et tantale, doivent être telles que :

$$Cr + 3 \times (Mo + W/2) + 10 \times (V + Nb/2 + Ta/4) \geq 1$$

Toutes ces relations doivent être satisfaites simultanément.

Dans le domaine de composition ainsi défini, un domaine préférentiel peut être déterminé par les conditions suivantes :

$$0,37 \% \leq C \leq 0,45 \%$$

$$0\% \leq Si \leq 0,15\%$$

$$0,2\% \leq Mn \leq 1,5\%$$

$$0 \% \leq Ni \leq 0,5 \%$$

$$0 \% \leq Cr \leq 2,5 \%$$

$$0\% \leq Mo + W/2 \leq 1 \%$$

$$0 \leq Cu \leq 1 \%$$

$$0\% \leq V + Nb/2 + Ta/4 \leq 0,2\%$$

$$0,005\% \leq Al \leq 0,2\%$$

$$0,005\% \leq B \leq 0,015\%$$

$$0\% \leq Ti + Zr/2 \leq 0,3\%$$

$$Cr + 3 \times (Mo + W/2) + 10 \times (V + Nb/2 + Ta/4) \geq 1$$

$$R \leq 2,33 \times Tr - 2,4$$

L'acier pouvant contenir, en outre, les autres éléments déjà indiqués plus haut (soufre, sélénium, tellure, bismuth, plomb et calcium). Le titane étant introduit, de préférence, de la façon qui a été indiquée plus haut.

Bien que les aciers dont la teneur en carbone est de l'ordre de 0,4 % sont, généralement, considérés comme étant difficilement soudables, les moules fabriqués avec l'acier selon invention peuvent être réparés par soudure moyennant un préchauffage et un post chauffage à une température supérieure ou égale à 300°C environ. De ce point de vue, le domaine de composition choisi présente l'avantage de faciliter la mise en oeuvre après réparation (usinage, polissage, grainage) par ce que l'écart de dureté ΔH entre le métal de base et les ZAT de soudage reste modéré (moins de 100 HB), et, à trempabilité égale, est sensiblement inférieur aux écarts de dureté entre ZAT et métal de base obtenu avec les aciers selon l'art antérieur.

Pour fabriquer un bloc d'acier utilisable pour la fabrication de moules, on élabore l'acier liquide, on le coule sous forme d'un demi produit tel qu'un lingot ou une brame, puis on lamine ou on forge le demi produit pour obtenir un bloc, qui peut, par exemple, être une tôle. Le demi produit est, alors, soumis à un traitement thermique de trempe et de revenu, destiné à lui conférer une structure martensitique ou bainitique, essentiellement exempte de ferrite, composant défavorable à l'usinabilité. Le bloc qui, en général, a une forme parallélépipédique, a une dimension caractéristique **d**, le plus souvent la plus petite dimension, qui, en combinaison avec la nature du milieu de trempe, détermine la vitesse de refroidissement à coeur. Pour que la structure à coeur soit exempte de ferrite, la trempabilité de l'acier doit être suffisante pour que la vitesse critique d'apparition de la ferrite soit inférieure à la vitesse de refroidissement à coeur.

Le revenu doit être effectué au dessus de 500°C, et, mieux encore, au dessus de 550°C, mais en dessous du point $Ac_1$ de l'acier.

L'acier selon l'invention présente un intérêt particulier pour la fabrication de moules par fonderie. Les moules ainsi obtenus sont en acier moulé, et non pas en acier corroyé comme cela a été décrit ci-dessus. Selon ce procédé, au lieu d'usiner l'empreinte du moule dans un bloc massif parallélépipèdique dans lequel on perce des canaux de refroidissement par circulation d'eau, on fabrique par fonderie une ébauche de moule comportant une ébauche de l'empreinte du moule et des parties externes ayant une forme appropriée pour assurer une résistance mécanique suffisante tout en conduisant à des parois beaucoup moins épaisses que celles qui sont obtenues par la technique d'usinage de l'empreinte dans un bloc massif. Le moule, lui même, est obtenu par un usinage de finition de l'ébauche et par un traitement thermique. L'épaisseur des parois du moule étant relativement faible, l'utilisation de l'acier selon l'invention dont la conductibilité thermique est très bonne, permet de réduire, voire de supprimer, le refroidissement par circulation d'eau dans des canaux percés dans les parois du moule, et d'assurer le refroidissement du moule, pendant son utilisation, par une circulation de gaz autour des parties externes du moule. L'usinage de l'empreinte fait souvent apparaître des porosités qui sont réparées par soudage. La relativement bonne soudabilité de l'acier facilite cette opération. Le traitement thermique est identique au traitement thermique effectué sur les moules en acier corroyé, cependant, il peut être précédé d'une ou plusieurs austénitisations destinées à affiner le grain.

A titre d'exemple, on a élaboré les aciers A, B, C, D, selon l'invention et les aciers E, F, G, selon l'art antérieur. Les compositions chimiques de ces aciers étaient ( en millièmes de % en poids) :

|  | C | Si | Mn | Ni | Cr | Mo | V | B | Al | Ti | N |
|---|---|---|---|---|---|---|---|---|---|---|---|
| A | 400 | 60 | 300 | 200 | 1900 | 650 | 50 | 3 | 20 | 35 | 5 |
| B | 410 | 50 | 520 | 190 | 2220 | 810 | - | 3 | 30 | 23 | 6 |
| C | 380 | 80 | 1050 | 150 | 975 | 780 | - | 2 | 60 | - | 6 |
| D | 410 | 55 | 750 | 210 | 1925 | 850 | - | - | 25 | - | 6 |
| E | 395 | 300 | 1490 | 210 | 1920 | 270 | - | - | 30 | - | 6 |
| F | 410 | 310 | 1410 | 980 | 1950 | 280 | - | - | 27 | - | 5 |
| G | 400 | 200 | 600 | 200 | 1400 | 400 | - | - | 25 | - | 7 |

Avec ces aciers on a fabriqué des blocs trempés revenus utilisables pour la fabrication de moules. Les épaisseurs (dimension caractéristique **d**) des blocs, les modes de trempe, les conditions de revenu, les coefficient **R** de résistivité thermique et **Tr** de trempabilité, les valeurs de conductibilité thermique, les duretés obtenues et les écarts de dureté ΔH entre ZAT et métal de base étaient :

|  | **d** mm | trempe | revenu | **Tr** | **R** | conduct | dureté | ΔH |
|---|---|---|---|---|---|---|---|---|
| A | 140 | air | 600°C | 4,77 | 7,16 | 51 | 320 | 5 |
| B | 900 | eau | 600°C | 5,4 | 8,47 | 47 | 310 | 55 |
| C | 600 | eau | 600°C | 5,13 | 8,53 | 47 | 330 | 16 |
| D | 600 | eau | 620°C | 5,05 | 8,97 | 46 | 325 | 53 |
| E | 150 | air | 600°C | 4,9 | 12,9 | 39 | 320 | 107 |
| F | 700 | eau | 600°C | 5,4 | 14,8 | 37 | 305 | 135 |
| G | 180 | eau | 600°C | 3,8 | 8,5 | 47 | 278 | 44 |
| conduct = conductivité thermique exprimée en W/m/°K dureté exprimée en Brinell | | | | | | | | |

Ces résultats montrent que les aciers A, B, C et D selon l'invention ont des indices de trempabilité comparables

EP 0 805 220 B1

à celles des aciers E et F selon l'art antérieur, mais des valeurs de conductibilité thermique très supérieures (près de 30 %). L'acier G selon l'art antérieur a une conductibilité thermique comparable à celle des aciers B, C et D, mais une trempabilité beaucoup plus faible que celle de ces aciers. Du fait de cette faible trempabilité, l'épaisseur maximale qui peut être fabriquée est inférieure à 200 mm, et la trempe doit, impérativement, être faite à l'eau, ce qui est un inconvénient pour les faibles épaisseurs.

Les aciers A à D selon l'invention ont un écart de dureté $\Delta H$ entre ZAT et métal de base inférieur à 55 HB, alors que les aciers E et F ont un $\Delta H$ supérieur à 100 HB. L'acier G selon l'art antérieur a un $\Delta H$ faible (44HB), mais il a également une trempabilité très médiocre.

L'acier selon l'invention peut être utilisé pour la fabrication de blocs dont la dimension caractéristique est comprise entre 20 mm et au moins 1500 mm, dont la structure est, en tous points, martensitique ou bainitique, essentiellement exempte de ferrite, et dont la dureté est, en tous points, comprise entre 250 Brinell et 370 Brinell. Ces blocs peuvent être utilisés pour la fabrication de moules pour injection de matières plastiques ou de caoutchouc, ou de toute autre matière moulée à une température de préférence inférieure à 500 °C environ.

Lorsque les moules sont réparés par soudure, il est très souhaitable que le métal d'apport ait la même composition que le métal de base, aussi, l'acier selon l'invention peut être fabriqué sous forme de fil pour soudage ou pour fabrication d'électrodes de soudage.


**Revendications**

1.  Acier pour la fabrication de moules pour injection de matières plastiques ou de caoutchouc, **caractérisé en ce que** sa composition chimique contient, en poids:

$$0,35\% \leq C \leq 0,5\%$$

$$0\% \leq Si \leq 0,5\%$$

$$0,2\% \leq Mn \leq 2,5\%$$

$$0\ \% \leq Ni \leq 4\ \%$$

$$0\ \% \leq Cr \leq 4\ \%$$

$$0\% \leq Mo + W/2 \leq 2\%$$

$$0 \leq Cu \leq 1\ \%$$

$$0\% \leq V + Nb/2 + Ta/4 \leq 0,5\%$$

$$0,005\ \% \leq Al \leq 0,2\ \%$$

$$0\% \leq B \leq 0,015\%$$

- éventuellement, au moins un élément pris parmi le titane et le zirconium, en des teneurs telles que la somme de la teneur en titane et de la moitié de la teneur en zirconium soit inférieure ou égale à 0,3 %,
- éventuellement, au moins un élément pris parmi le soufre, le sélénium et le tellure, la somme des teneurs en ces éléments étant inférieure ou égale à 0,2 %,
- éventuellement, au moins un élément pris parmi le plomb et le bismuth, la somme des teneurs en ces éléments étant inférieure ou égale à 0,2 %,

- éventuellement du calcium en une teneur inférieure ou égale à 0,1 %,

le reste étant du fer et des impuretés parmi lequelles d'azote résultant de l'élaboration, l'analyse satisfaisant, simultanément, les relations suivantes :

$$Cr + 3 \times (Mo + W/2) + 10 \times (V + Nb/2 + Ta/4) \geq 1$$

$$R = 3,8 \times C + 10 \times Si + 3,3 \times Mn + 2,4 \times Ni + 1,4 \times (Cr + Mo + W/2) \leq 9$$

$$Tr = 3,8 \times C + 1,1 \times Mn + 0.7 \times Ni + 0,6 \times Cr + 1,6 \times (Mo + W/2) + kB \geq 3$$

avec kB = 0,5 si B ≥ 0,0005 % et kB = 0 si non,
et,

$$R \leq Max (2,33 \times Tr - 1; 0,9 \times Tr + 4),$$

R représentant la résistivité thermique et
Tr représentant la trempabilité.

2. Acier selon la revendication 1 **caractérisé en ce que** :

$$Si \leq 0,15\%$$

3. Acier selon la revendication 1 ou la revendication 2 **caractérisé en ce que** :

$$B \geq 0,0005 \%$$

4. Acier selon l'une quelconque des revendications 1 à 3 **caractérisé en ce que** :

$$Tr \geq 4,3$$

5. Acier selon l'une quelconque des revendications 1 à 4 **caractérisé en ce que** :

$$Si \leq 0,1 \%$$

6. Acier selon l'une quelconque des revendications 1 à 5 **caractérisé en ce que** :

$$0,37 \% \leq C \leq 0,45 \%$$

$$0 \% \leq Si \leq 0,15 \%$$

$$0,2 \% \leq Mn \leq 1,5 \%$$

$$0 \% \leq Ni \leq 0,5 \%$$

$$0\% \le Cr \le 2,5\ \%$$

$$0\ \% \le Mo + W/2 \le 1\ \%$$

$$0 \le Cu \le 1\ \%$$

$$0\ \% \le V + Nb/2 + Ta/4 \le 0,2\ \%$$

$$0,005\ \% \le Al \le 0,2\%$$

$$0,0005\% \le B \le 0,015\ \%$$

$$0\ \% \le Ti + Zr/2 \le 0,3\ \%$$

et,

$$R \le 2,33\ x\ Tr - 2,4$$

7.  Acier selon l'une quelconque des revendications 1 à 6 **caractérisé en ce que** les teneurs en titane, zirconium et azote soient, de préférence, telles que:

$$0,00003 \le (N)\ x\ (Ti + Zr/2) \le 0,0016$$

et **en ce que**, à l'état solide, le nombre de précipités de nitrure de titane ou de zirconium de taille supérieure à 0,1μm comptés sur une aire de 1 mm² d'une coupe micrographique est inférieur à 4 fois la somme de la teneur totale en titane précipité sous forme de nitrures et de la moitié de la teneur totale en zirconium précipité sous forme de nitrures, exprimée en millièmes de % en poids.

8.  Bloc en acier selon l'une quelconque des revendications 1 à 7 **caractérisé en ce que** sa dimension caractéristique est comprise entre 20 mm et 1500 mm, la structure de l'acier est, en tous points, martensitique ou bainitique, la dureté est, en tous points, comprise entre 250 Brinell et 370 Brinell.

9.  Fil pour soudage ou pour la fabrication d'électrodes de soudage **caractérisé en ce qu'**il est constitué d'un acier selon l'une quelconque des revendications 1 à 7.

**Claims**

1.  Steel for the manufacture of moulds for injection moulding of plastics or rubber, **characterized in that** its chemical composition contains, by weight:

$$0.35\% \le C \le 0.5\%$$

$$0\% \le Si \le 0.5\%$$

$$0.2\% \le Mn \le 2.5\%$$

$$0\% \leq Ni \leq 4\%$$

$$0\% \leq Cr \leq 4\%$$

$$0\% \leq Mo + W/2 \leq 2\%$$

$$0 \leq Cu \leq 1\%$$

$$0\% \leq V + Nb/2 + Ta/4 \leq 0.5\%$$

$$0.005\% \leq Al \leq 0.2\%$$

$$0\% \leq B \leq 0.015\%$$

- optionally, at least one element taken from titanium and zirconium, in contents such that the sum of the titanium content and of half the zirconium content is less than or equal to 0.3%,
- optionally, at least one element taken from sulphur, selenium and tellurium, the sum of the contents of these elements being less than or equal to 0.2%,
- optionally, at least one element taken from lead and bismuth, the sum of the contents of these elements being less than or equal to 0.2%,
- optionally, calcium in a content less than or equal to 0.1%, the balance being iron and impurities, among them nitrogen, resulting from the smelting, the composition simultaneously satisfying the following relationships:

$$Cr + 3 \times (Mo + W/2) + 10 \times (V + Nb/2 + Ta/4) \geq 1$$

$$R = 3.8 \times C + 10 \times Si + 3.3 \times Mn + 2.4 \times Ni + 1.4 \times (Cr$$

$$+ Mo + W/2) \leq 9$$

$$Qu = 3.8 \times C + 1.1 \times Mn + 0.7 \times Ni + 0.6 \times Cr + 1.6 \times$$

$$(Mo + W/2) + kB \geq 3$$

with kB = 0.5 if B ≥ 0.0005% and kB = 0 if not,
and R ≤ Ma (2.33 × H - 1, 0.9 × Qu + 4),

R standing for thermal resistivity and
H standing for hardenability

2. Steel according to Claim 1, **characterized in that**:

$$Si \leq 0.15\%.$$

3. Steel according to Claim 1 or Claim 2, **characterized in that**:

$$B \geq 0.0005\%.$$

4. Steel according to any one of Claims 1 to 3, **characterized in that**:

$$H \geq 4.3.$$

5. Steel according to any one of Claims 1 to 4, **characterized in that**:

$$Si \leq 0.1\%.$$

6. Steel according to any one of Claims 1 to 5, **characterized in that**:

$$0.37\% \leq C \leq 0.45\%$$

$$0\% \leq Si \leq 0.15\%$$

$$0.2\% \leq Mn \leq 1.5\%$$

$$0\% \leq Ni \leq 0.5\%$$

$$0\% \leq Cr \leq 2.5\%$$

$$0\% \leq Mo + W/2 \leq 1\%$$

$$0 \leq Cu \leq 1\%$$

$$0\% \leq V + Nb/2 + Ta/4 \leq 0.2\%$$

$$0.005\% \leq Al \leq 0.2\%$$

$$0.0005\% \leq B \leq 0.015\%$$

$$0\% \leq Ti + Zr/2 \leq 0.3\%$$

and

$$R \leq 2.33 \times Tr\ 2.4.$$

7. Steel according to any one of Claims 1 to 6, **characterized in that** the titanium, zirconium and nitrogen contents are preferably such that:

$$0.00003 \leq (N) \times (Ti + Zr/2) \leq 0.0016$$

and **in that**, in the solid state, the number of titanium or zirconium nitride precipitates of size greater than 0.1 µm, counted over an area of 1 mm² of a micrographic section, is less than 4 times the sum of the total content of titanium precipitated in the form of nitrides and of half the total content of zirconium precipitated in the form of nitrides, expressed in thousandths of% by weight.

8. Block of steel according to any one of Claims 1 to 7, **characterized in that** its characteristic dimension is between 20 mm and 1500 mm, the structure of the steel is, at all points, martensitic or bainitic and the hardness is, at all points, between 250 Brinell and 370 Brinell.

9. Wire for welding or for the manufacture of welding electrodes, **characterized in that** it consists of a steel according to any one of Claims 1 to 7.

**Patentansprüche**

1. Stahl zur Herstellung von Formen zum Einspritzen von Kunststoff oder Gummi, **dadurch gekennzeichnet, dass** seine chemische Zusammensetzung folgende Gewichtsanteile enthält:

$$0,35 \% \leq C \leq 0,5 \%$$

$$0\% \leq Si \leq 0,5\%$$

$$0,2\% \leq Mn \leq 2,5\%$$

$$0\% \leq Ni \leq 4\%$$

$$0\% \leq Cr \leq 4\%$$

$$0\% \leq Mo + W/2 \leq 2\%$$

$$0 \leq Cu \leq 1\%$$

$$0 \% \leq V + Nb/2 + Ta/4 \leq 0,5 \%$$

$$0,005 \% \leq Al \leq 0,2\%$$

$$0\% \leq B \leq 0,015\%$$

- eventuell mindestens ein Element ausgewählt aus der Gruppe bestehend aus Titan und Zirkonium, wobei die Summe des Anteils an Titan und der Hälfte des Anteils an Zirkonium kleiner-gleich 0,3 % ist,
- eventuell mindestens ein Element ausgewählt aus der Gruppe bestehend aus Schwefel, Selen und Tellur, wobei die Summe des Anteils der enthaltenen Elemente kleiner-gleich 0,2 % ist,
- eventuell mindestens ein Element ausgewählt aus der Gruppe bestehend aus Blei und Wismut, wobei die Summe des Anteils der enthaltenen Elemente kleiner-gleich 0,2 % ist,
- eventuell einen Anteil an Kalzium kleiner-gleich 0,1 %,

wobei der Rest aus Eisen und aus der Herstellung herrührenden Verunreinigungen, darunter Stickstoff, besteht, wobei die Analyse gleichzeitig den folgenden Verhältnissen gerecht wird:

$$Cr + 3 \times (Mo + W/2) + 10 \times (V + Nb/2 + Ta/4) \geq 1$$

$$R = 3{,}8 \times C + 10 \times Si + 3{,}3 \times Mn + 2{,}4 \times Ni + 1{,}4 \times (Cr + Mo + W/2) \leq 9$$

$$Tr = 3{,}8 \times C + 1{,}1 \times Mn + 0{,}7 \times Ni + 0{,}6 \times Cr + 1{,}6 \times (Mo + W/2) + kB \geq 3$$

wobei kB = 0,5 wenn B ≥ 0,0005 % und kB = 0 wenn nicht,
und

$$R \leq Max\ (2{,}33 \times Tr - 1;\ 0{,}9 \times Tr + 4),$$

wobei R für den Wärmewiderstand und Tr für die Härtbarkeit stehen

**2.** Stahl nach Anspruch 1, **dadurch gekennzeichnet, dass**

$$Si \leq 0{,}15\%$$

**3.** Stahl nach Anspruch 1 oder Anspruch 2, **dadurch gekennzeichnet, dass**

$$B \geq 0{,}0005\ \%$$

**4.** Stahl nach einem der Ansprüche 1 bis 3, **dadurch gekennzeichnet, dass**

$$Tr \geq 4{,}3$$

**5.** Stahl nach einem der Ansprüche 1 bis 4, **dadurch gekennzeichnet, dass**

$$Si \leq 0{,}1\%$$

**6.** Stahl nach einem der Ansprüche 1 bis 5, **dadurch gekennzeichnet, dass**

$$0{,}37\ \% \leq C \leq 0{,}45\ \%$$

$$0\% \leq Si \leq 0{,}15\%$$

$$0{,}2\ \% \leq Mn \leq 1{,}5$$

$$0\% \leq Ni \leq 0{,}5\%$$

$$0\% \leq Cr \leq 2{,}5\%$$

$$0\% \leq Mo + W/2 \leq 1\%$$

$$0 \leq Cu \leq 1\%$$

$$0\% \leq V + Nb/2 + Ta/4 \leq 0,2\%$$

$$0,005\% \leq Al \leq 0,2\%$$

$$0,0005\% \leq B \leq 0,015\%$$

$$0\% \leq Ti = Zr/2 \leq 0,3\%,$$

und

$$R \leq 2,33 \times Tr - 2,4.$$

7. Stahl nach einem der Ansprüche 1 bis 6, **dadurch gekennzeichnet, dass** der Gehalt an Titan, Zirconium und Stickstoff (in Gewichtsprozenten) wie folgt ist:

$$0,00003 \leq (N) \times (Ti + Zr/2) \leq 0,0016$$

und dass, im festen Zustand, die Zahl der abgeschiedenen Titan- oder Zircomumnnrid-Teilchen, die größer sind als 0,1 $\mu$m und auf einer Fläche von 1 mm$^2$ mit mikrographischem Schnitt gezählt wurden, kleiner als das Vierfache der Summe des Gesamtgehalts an als Nitride abgeschiedenem Titan und der Hälfte des Gesamtgehalts an als Nitride abgeschiedenem Zirconium ist, wobei diese Summe in tausendstel Gewichtsprozenten ausgedrückt wird.

8. Stahlblock nach einem der Ansprüche 1 bis 7, **dadurch gekennzeichnet, dass** seine charakteristische Abmessung zwischen 20 mm und 1500 mm liegt, das Gefüge des Stahls im gesamten Block martensitisch oder bainitisch ist, und die Härte im gesamten Block zwischen 250 und 370 Brinell liegt.

9. Draht zum Schweißen oder zur Herstellung von Schweißelektroden, **dadurch gekennzeichnet, dass** er aus einem Stahl nach einem der Ansprüche 1 bis 7 besteht.